Europäisches Patentamt

**European Patent Office**

**Office européen des brevets**

(11) Veröffentlichungsnummer: **0 133 463**

**B1**

(12) ## EUROPÄISCHE PATENTSCHRIFT

(45) Veröffentlichungstag der Patentschrift:
**20.05.87**

(51) Int. Cl.⁴: **G 03 B 21/11, F 16 C 29/02**

(21) Anmeldenummer: **84107185.5**

(22) Anmeldetag: **22.06.84**

(54) Kreuzschlittenführung, insbesondere für ein Mikrofilm-Lesegerät.

(30) Priorität. **10.08.83 DE 3328800**

(43) Veröffentlichungstag der Anmeldung:
**27.02.85 Patentblatt 85/9**

(45) Bekanntmachung des Hinweises auf die Patenterteilung:
**20.05.87 Patentblatt 87/21**

(84) Benannte Vertragsstaaten:
**AT BE CH DE FR GB IT LI LU NL SE**

(56) Entgegenhaltungen:
**DE-A-2 542 344**
**DE-A-2 548 353**
**DE-U-1 988 010**
**US-A-3 822 000**
**US-A-3 873 202**

(73) Patentinhaber: **MAP Mikrofilm Apparatebau Dr. Poehler GmbH & Co. KG, Schulstrasse 2, D-6352 Ober- Mörlen (DE)**

(72) Erfinder: **Walczak, Andrzej, Auf der Gickelsburg 8, D-6352 Ober- Mörlen (DE)**

(74) Vertreter: **Schlagwein, Udo, Dipl.- Ing., Anwaltsbüro Ruppert & Schlagwein Bahnhofsallee 11, D-6350 Bad Nauheim (DE)**

EP 0 133 463 B1

**Beschreibung**

Die Erfindung bezieht sich auf einen Kreuzschlitten, insbesondere für ein Mikrofilm-Lesegerät, bei dem die beweglichen Teile mit Gleitsteinen jeweils auf zumindest einer Führungsschiene verschiebbar gehalten sind. Ein solcher Kreuzschlitten ist beispielsweise in der US-A-3,822,090 beschrieben.

Gemäß der genannten US-A-3,822,090 ist ein Schlitten mittels Gleitbuchsen auf zwei im Querschnitt kreisförmigen Führungsschienen verschieblich angeordnet. Diese Führungsschienen sind ihrerseits an einem weiteren Schlitten befestigt, der eine quer zu den Führungsschienen verlaufende, weitere Führungsschiene mit Führungsrollen umgreift und dadurch verschieblich ist.

Die DE-A-2 542 344 beschreibt ein Mikrofilm-Lesegerät, bei dem die beiden Schlitten eines Kreuzschlittens auf insgesamt zwei in verschiedene Koordinatenrichtungen ausgerichteten Führungsschienen mittels Gleitsteinen verschieblich angeordnet sind.

Der Stand der Technik zeigt, daß es bei Kreuzschlitten bekannt ist, bewegliche Teile sowohl rollend als auch gleitend zu lagern. Der Vorteil einer rollenden Lagerung gegenüber der gleitenden Lagerung liegt darin, daß sie geringere Verschiebekräfte erfordert, jedoch wird dieser Vorteil bei einem Mikrofilm-Lesegerät mit stärkerem Vergrößerungsfaktor oftmals zu einem Nachteil, weil die Filmbühne zu empfindlich reagiert und das Bild auf der Filmbühne dadurch leicht zu tanzen beginnt.

Der Erfindung liegt die Aufgabe zugrunde, einen Kreuzschlitten der eingangs genannten Art zu entwickeln, der besonders billig herstellbar ist und sehr geringe Anforderungen an die Meßgenauigkeit des Kreuzschlittens stellt.

Diese Aufgabe wird erfindungsgemäß durch die im Anspruch 1 angegebenen Maßnahmen gelöst.

Der erfindungsgemäße Kreuzschlitten ist überaus einfach gestaltet, dennoch aber in der Lage, eine Filmbühne leichtgängig und präzise zu führen. Die Leichtgängigkeit und geringen Anforderungen an die Meßgenauigkeit kommen vor allem dadurch zustande, daß die Gleitsteine das Führungsteil nur an den beiden oberen Längskanten berühren und nicht großflächig auf dem Führungsteil aufsitzen. Da die Gleitsteine zugleich unter das Führungsteil greifen, kann der Kreuzschlitten nicht unbeabsichtigt nach oben abgehoben werden. Wie bei bekannten Kreuzschlitten braucht der erfindungsgemäße Kreuzschlitten nur eine Führungsschiene für jede der Tragplatten zu haben. Es genügt, wenn jede Tragplatte auf der der Führungsschiene gegenüberliegenden Seite gleitend auf eine Anlagefläche abgestützt wird. Natürlich eignet sich der erfindungsgemäße Kreuzschlitten auch, wenn jeweils zwei Führungsschienen für jede Tragplatte vorgesehen werden und die Tragplatten auf den Führungsschienen mit insgesamt vier oder auch nur drei Gleitsteinen gehalten sind.

Hervorzuheben ist auch, daß der erfindungsgemäße Kreuzschlitten sehr flach baut. Da die Gleitsteine aus Kunststoff zäharter Struktur leicht durch Spritzen herstellbar sind, ist der erfindungsgemäße Kreuzschlitten äußerst billig herstellbar. Obendrein ist festzuhalten, daß durch die im Querschnitt kreissegmentförmigen Führungsflächen und die geringe Reibung Spiel nicht in Erscheinung tritt.

Von Vorteil ist es, wenn die Führungsfläche jedes Gleitsteines in Haupterstreckungsrichtnug der Führungsschiene ballig ist. Durch diese Maßnahme wird die Leichtgängigkeit des Kreuzschlittens noch weiter gefördert. Durch die Balligkeit lassen sich weiterhin die Anforderungen an die Parallelität der Führungsschienen und exakte Ausrichtung der Gleitsteine in Bezug auf die Führungsschienen verringern.

Die Gleitsteine richten sich nach dem Führungsteil aus, wenn sie um eine senkrechte Achse drehbar in einer aufliegenden Tragplatte gelagert sind.

Das Verbinden der beiden einen Kreuzschlitten bildenden Tragplatten mit den erforderlichen Gleitsteinen ist besonders einfach, wenn die Gleitsteine wie im Anspruch 4 angegeben gestaltet sind.

Eine andere günstige Ausgestaltung der Erfindung besteht darin, daß die Gleitsteine aus einem elastischen Kunststoff bestehen und so bemessen sind, daß sie von oben über das Führungsteil zu schnappen vermögen. Die Montage eines Kreuzschlittens mit solchen Gleitsteinen ist besonders einfach durchzuführen, da die Tragplatten nicht von der Seite auf die Schienen geschoben werden müssen.

Wenn der Kreuzschlitten pro Tragplatte zwei Führungsschienen hat und die Tragplatten mit insgesamt vier Gleitsteinen jeweils an zwei Führungsschienen gehalten sind, dann ist es vorteilhaft, die Führungsschienen mittels elastischem Doppelklebeband begrenzt beweglich zu halten, weil sie dann beim Verschieben der Tragplatten sich geringfügig bewegen können und dadurch Abweichungen in der Parallelität und Höhe ausgleichen. Die Führungsschienen stellen sich jeweils von selbst parallel, so daß die Tragplatten immer sauber aufliegen. Die Erfindung läßt verschiedene Ausführungsmöglichkeiten zu. Zur Verdeutlichung ihres Grundprinzips ist eine davon schematisch in der Zeichnung dargestellt und wird nachfolgend beschrieben. Es zeigen

Figur 1 - einen Querschnitt durch einen die Erfindung betreffenden Führungsbereich eines Kreuzschlittens;

Figur 2 - einen Schnitt entlang der Linie II/II in Figur 1.

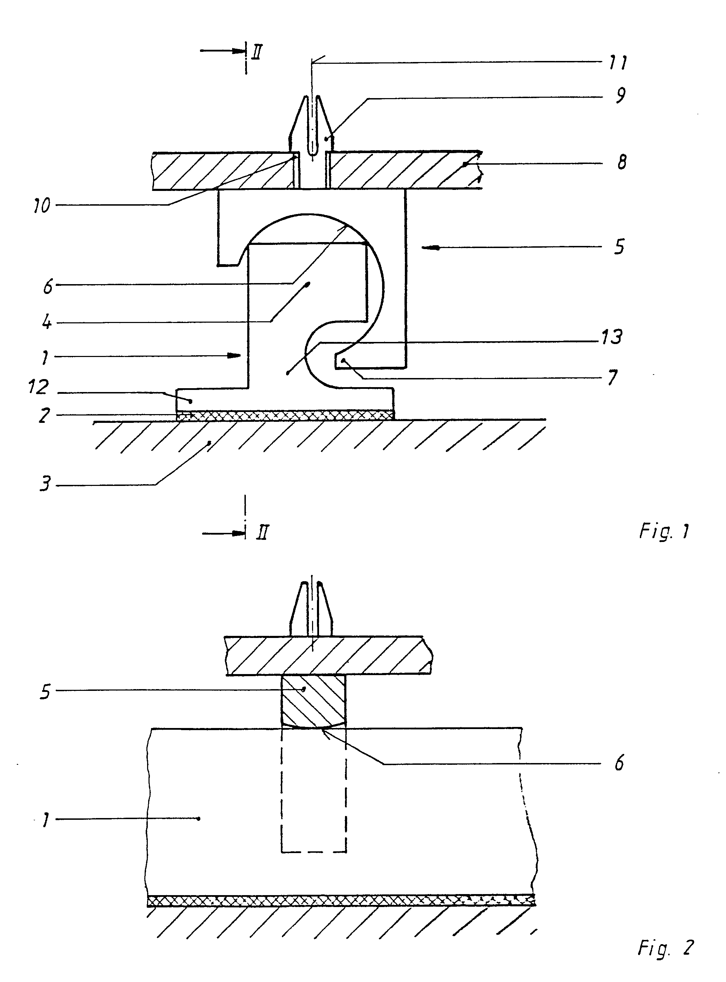

Die Figur 1 zeigt eine Führungsschiene 1, welche ein Fußteil 12 hat, das mit einem elastischen Doppelklebeband 2 auf einer Unterlage 3 befestigt ist. Die Führungsschiene 1 hat ein Führungsteil 4 rechteckigen Querschnitts, wobei die Höhe des Führungsteils 4 geringer ist als die Breite. Dieses Führungsteil 4 ist mittels eines Stegteils 13 mit dem Fußteil 12 verbunden.

Auf dem Führungsteil 4 sitzt ein Gleitstein 5, der mit einer im Querschnitt kreissegmentförmigen Führungsfläche 6 das Führungsteil 4 umfaßt und mit mindestens einem Endbereich 7 eine untere Längskante des Führungsteils 4 hintergreift. Dadurch kann der Gleitstein 5 nicht unbeabsichtigt von dem Führungsteil 4 abgehoben werden. Wie Figur 2 zeigt, ist die Führungsfläche 6 in Haupterstreckungsrichtung des Führungsteils 4 ballig. Dadurch berührt die Führungsfläche 6 das Führungsteil 4 nur punktförmig auf den beiden oberen Längskanten des Führungsteils 4.

Zur Befestigung des Gleitsteins 5 an einer zu führenden Tragplatte 8 ist oben am Gleitstein 5 ein geschlitzter Einraststift 9 angeformt, der hinter einer Bohrung 10 zu rasten vermag und den Gleitstein 5 dadurch festhält. Der geschlitzte Einraststift 9 ist so bemessen, daß der Gleitstein 5 noch um eine senkrechte Achse 11 schwenkbar ist, wenn der geschlitzte Einraststift 9 hinter der Bohrung 10 sich verrastet hat.

Für jede Tragplatte werden normalerweise zwei Führungsschienen 1 vorgesehen, auf denen die Tragplatte 8 mit insgesamt vier Gleitsteinen 5 gehalten ist.

Möglich ist natürlich auch eine Dreipunkt-Abstützung. Eine andere Ausführungsform könnte darin bestehen, eine Tragplatte nur auf einer Führungsschiene zu führen und an der gegenüberliegenden Seite lediglich auf einer Anlagefläche gleitend abzustützen.

**Patentansprüche**

1. Kreuzschlitten, insbesondere für ein Mikrofilm-Lesegerät, bei dem die beweglichen Teile mit Gleitsteinen jeweils auf zumindest einer Führungsschiene verschiebbar gehalten sind, dadurch gekennzeichnet, daß die Führungsschienen (1) ein Fußteil (12), ein Stegteil (13) und ein im Querschnitt im wesentlichen rechteckiges Führungsteil (4), welches breiter als hoch ist, umfassen und daß die Gleitsteine (5) mit einer im Querschnitt kreissegmentförmigen Führungsfläche (6) das Führungsteil (4) derart umfassen, daß die Führungsfläche (6) gegen die beiden oberen Längskanten des Führungsteils (4) anliegt und mit mindestens einem Endbereich (7) mit Spiel eine untere Längskante des Führungsteils (4) hintergreift.

2. Kreuzschlitten nach Anspruch 1, dadurch gekennzeichnet, daß die Führungsfläche (6) in Haupterstreckungsrichtung der Führungsschiene (1) ballig ist.

3. Kreuzschlitten nach Anspruch 1 oder 2, dadurch gekennzeichnet, daß die Gleitsteine (5) um eine senkrechte Achse (11) drehbar in einer aufliegenden Tragplatte (8) gelagert sind.

4. Kreuzschlitten nach Anspruch 3, dadurch gekennzeichnet, daß die Gleitsteine (5) jeweils einstückig mit einem geschlitzten Einraststift (9) zur drehbaren Lagerung in der jeweiligen Tragplatte (8) versehen sind.

5. Kreuzschlitten nach einem der Ansprüche 1 bis 4, dadurch gekennzeichnet, daß die Gleitsteine (5) aus einem elastischen Kunststoff bestehen und so bemessen sind, daß sie von oben über das Führungsteil (4) zu schnappen vermögen.

6. Kreuzschlitten nach Anspruch 1 oder einem der folgenden, dadurch gekennzeichnet, daß für jede Tragplatte (8) zumindest zwei von Gleitsteinen (5) hintergriffene Führungsschienen (1) vorgesehen und die Führungsschienen (1) mittels elastischem Doppelklebeband (2) begrenzt beweglich befestigt sind.

**Claims**

1. Cross-slide, especially for a microfilm reader, the movable parts of which with sliding pads each are arranged movable on at least one guide rail, characterized in that the guide rails (1) consist of a base portion (12), a web portion (13) and a guide portion (4) the cross-section of which essentially is rectangular and the width of which is greater than its height, and that the sliding pads (5) embrace the guide portion (4) with an, in the cross-section, inner arcuate segment guide surface (6) in such a manner, that the guide surface (6) contacts the two upper longitudinal edges of the guide section (4) and reaches with at least one lower portion (7) with distance behind a lower longitudinal edge of the guide portion (4).

2. Cross-slide according to claim 1, characterized in that the guide surface (6) is cambered in the direction of the longitudinal axis of the guide rail (1).

3. Cross-slide according to claim 1 or 2, characterized in that the sliding pads (5) are pivotable about a vertical axis (11) and arranged in a seated supporting plate (8).

4. Cross-slide according to claim 3, characterized in that the sliding pads (5) are each provided with an integral, slotted retainer pin (9) for pivotable arrangement in the respective supporting plate (8).

5. Cross-slide according to one of the claims 1 to 4, characterized in that the sliding pads (5) are made of an elastic plastic material and dimensioned in such a way that they are capable of snapping over the guide portion (4) from above.

6. Cross-slide according to claim 1 or one of the following, characterized in that at least two guide rails (1) embraced by sliding pads (5) are provided for each supporting plate (8), and the guide rails (1) are mounted with limited movability by means of double elastic adhesive tape (2).

**Revendications**

1. Chariot en croix, notamment pour un lecteur de microfilms, dans lequel les parties mobiles sont tenues coulissant chacune avec des glisseurs sur au moins une glissière, caractérisé en ce que les glissières (1) ont une partie de pied (12), une partie d'entretoise (13) et une partie de guidage (4) qui est dans la section traversale essentiellement rectangulaire et qui est plus large que haut, et que les glisseurs (5) entourent avec une surface de guidage (6), qui est dans la section traversale en form d'un segment de cercle, la partie de guidage (4) d'une telle manière que la surface de guidage (6) est assise sur les deux arêtes longitudinales supérieures de la partie de guidage (4) et qu'elle saisit avec jeu derrière une arête longitudinale inférieure de la partie de guidage (4) avec au moins une zone extrème (7).

2. Chariot en croix selon la revendication 1, caractérisé en ce que la surface de guidage (6) est bombée dans la direction d'axe principale.

3. Chariot en croix selon la revendication 1 ou 2, caractérisé en ce que les glisseurs (5) sont montés mobiles autour d'une axe verticale (11) dans une plaque de support (8) qui est posée sur le glisseur (5).

4. Chariot en croix selon la revendication 3, caractérisé en ce que les glisseurs (5) sont pourvus chacun d'une cheville à verrouillage (9) fendue pour un arrangement pivotable dans la plaque de support (8) respective, le glisseur formant une piéce avec cette cheville à verrouillage (9).

5. Chariot en croix selon l'une quelconque des revendications 1 à 4, caractérisé en ce que les glisseurs (5) consistent en matière plastique élastique et sont dimensionnés de la sorte qu'ils peuvent s'enclencher du haut par dessus la partie de guidage (4).

6. Chariot en croix selon la revendication 1 ou l'une quelconque des revendications suivantes, caractérisé en ce que pour chaque plaque de support (8) au moins deux glissières (1) sont pourvues derrière lesquelles des glisseurs (5) saisissent et que les glissières (1) sont montées à mobilité limitée au moyen d'un double ruban adhésif et élastique (2).

Fig. 1

Fig. 2